(19) **Europäisches Patentamt**

**European Patent Office**

**Office européen des brevets**

(11) Veröffentlichungsnummer: **0 299 358 B1**

(12) **EUROPÄISCHE PATENTSCHRIFT**

(45) Veröffentlichungstag der Patentschrift: **02.01.92**

(51) Int. Cl.⁵: **B23K 26/00**

(21) Anmeldenummer: **88110858.3**

(22) Anmeldetag: **07.07.88**

(54) **Vorrichtung zum kontinuierlichten Verschweissen von Bändern und/oder Blechen.**

(30) Priorität: **17.07.87 DE 3723611**

(43) Veröffentlichungstag der Anmeldung:
**18.01.89 Patentblatt 89/03**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**WO-A-84/03059**
**DE-A- 2 708 040**
**DE-A- 3 407 417**

**PATENT ABSTRACTS OF JAPAN, Band 9, Nr.
256 (M-421)[1979], 15. Oktober 1985; & JP - A
- 60 106 684 (KOGYO GIJUTSUIN) 12.06.1985**

(73) Patentinhaber: **Thyssen Stahl Aktiengesellschaft**
**Kaiser-Wilhelm-Strasse 100**
**W-4100 Duisburg 11(DE)**

(72) Erfinder: **Sturm, Joseph**
**Kollwitzstrasse 6**
**W-4100 Duisburg 18(DE)**
Erfinder: **Prange, Wilfried, Dipl.-Ing.**
**Wilmastrasse 63**
**W-4220 Dinslaken(DE)**

(74) Vertreter: **Cohausz & Florack Patentanwälte**
**Postfach 14 01 61 Schumannstrasse 97**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Vorrichtung zum kontinuierlichen Verschweißen von auf Stoß geführten Bändern bzw. Blechen mittels eines ortsfesten Laserstrahls mit auf beiden Seiten der zu verschweißenden Bänder bzw. Bleche paarweise senkrecht zu deren Laufrichtung angeordneten Spannrollen.

Zum Längsnahtschweißen von Blechen oder Bändern mit einer feststehenden Schweißvorrichtung müssen die zu verschweißenden Bleche bzw. Bänder so geführt werden, daß deren Kanten auf Stoß aneinanderliegen, um problemlos verschweißt werden zu können. Bei biegsamen Bändern oder Blechen ist es dabei schwierig, die zu verschweißenden Band- oder Blechkanten auf Stoß aneinanderzulegen, ohne daß die Bänder oder Bleche überlappen und sie in dieser Lage zumindest am Schweißpunkt fest einzuspannen.

In einer älteren europäischen Patentanmeldung EP-A1-0234 346 (Artikel 54.3), bei der die Bänder auf Stoß zusammengeführt werden, ist die Schweißeinrichtung als Laserstrahlschweißeinrichtung ausgebildet und in Laufrichtung der Bänder gesehen hinter im Durchmesser großen Spannrollen im Bereich einer Gruppe von im Durchmesser wesentlich kleinerer, schmaler Führungsrollen angeordnet. Bei dieser Vorrichtung ist der Schweißkopf in einem dem Durchmesser der Führungsrollen entsprechenden Abstand von den miteinander zu verschweißenden Blechen entfernt.

Eine Schwierigkeit beim kontinuierlichen Verschweißen von auf Stoß geführten Bändern und Blechen ist, daß Unregelmäßigkeiten und Fehler in der Schweißnaht dadurch auftreten können, daß im Schweißpunkt die aneinanderliegenden Band- oder Blechkanten Aufwölbungen aufweisen und damit nicht plan nebeneinanderliegen. Solche Fehler treten insbesondere bei einer kleinen Einspannfläche der Bänder oder Bleche und bei Verschweißung dünner Bänder oder Bleche mittels Laserstrahlen auf, da die Blechkanten durch Aufwölbung aus dem Bereich des Schweißflecks des Laserstrahles und damit der maximalen Energieübertragung heraustreten. Mittels der vorgenannten Gruppe von im Durchmesser kleinen Führungsrollen ist es nicht möglich, die Bänder oder Bleche nahe genug am Schweißpunkt des Laserstrahls einzuspannen.

Es ist daher Aufgabe der vorliegenden Erfindung, eine Vorrichtung zum kontinuierlichen Schweißen von auf Stoß geführten Bändern oder Blechen zu schaffen, die auch bei dünnen Bändern beziehungsweise Blechen die Herstellung einer gleichmäßigen und ebenen Schweißnaht ermöglicht.

Diese Aufgabe wird erfindungsgemäß mit einer Vorrichtung der eingangs genannten Art dadurch gelöst, daß die Spannrollen aus Hohlachsen und darauf gelagerten und mit axialem Abstand voneinander angeordneten Rollenmänteln bestehen und jeder Schweißkopf der Laserstrahlschweißeinrichtung im Inneren der Hohlachse mindestens einer Spannrolle angeordnet ist, wobei als Durchgang für den Laserstrahl der Spalt zwischen den Rollenmänteln und eine Öffnung in der Hohlachse dienen. Bei gleichzeitiger Herstellung von mehreren parallelen Schweißnähten kann der Aufbau der Spannrollen mit Laserverschweißeinrichtung mehrfach vorgesehen sein, wobei zwischen jeweils zwei nebeneinanderliegenden Schweißnähten ein gemeinsamer Rollenmantel verwendet werden kann.

Bei der erfindungsgemäßen Vorrichtung werden die zu verschweißenden Blechränder im von den Spannrollen eingespannten Bereich mit dem Schweißfleck des Laserstrahls beaufschlagt. Wegen dieser Einspannung der Bleche oder Bänder mittels stabiler und groß dimensionierter Rollen kann es nicht zu einem Aufwölben der Blechkanten oder Verziehen der Bleche im Schweißbereich kommen. Der Durchmesser der Spannrollen kann an die Größe der verwendeten Laserschweißeinrichtung und insbesondere der Brennweite der Laseroptik angepaßt werden.

Grundsätzlich ist es möglich, die beiden Rollenmäntel auf einer durchgehenden Hohlachse anzuordnen. In diesem Fall ist an der dem zu verschweißenden Band zugewandten Seite in der Hohlachse eine Durchtrittsöffnung für den Laserstrahl vorgesehen. Vorzugsweise ist nach der Erfindung jedoch vorgesehen, daß die Hohlachse im Bereich des Spaltes zwischen den Rollenmänteln geteilt geteilt ist, wobei der dadurch zwischen den beiden Teilen der Hohlachse gebildete Spalt die Öffnung für den Durchgang des Laserstrahls bildet.

In der Regel ist es ausreichend, wenn ein Schweißkopf in einer der beiden sich gegenüberliegenden Spannrollen vorgesehen ist. Sofern aber besonders dicke Bleche oder Bänder verschweißt werden sollen, kann es im Hinblick auf die dafür erforderliche Energie zweckmäßig sein, daß jeweils mindestens ein Schweißkopf in den auf beiden Seiten der Bänder bzw. Bleche angeordneten Spannrollen vorgesehen ist und/oder mehrere Schweißköpfe in Band- beziehungsweise Blechlaufrichtung versetzt zueinander in einer auf einer Band- beziehungsweise Blechseite angeordneten Spannrolle angeordnet sind. Dabei ist allerdings darauf zu achten, daß die Richtung des Laserstrahls eines jeden Schweißkopfes auf den eingespannten Bereich gerichtet ist. Nach einer Ausgestaltung der Erfindung können die Spannrollen höhenverstellbar gelagert sein, um beispielsweise unterschiedlich dicke Bleche oder Bänder einspannen zu können. Sofern bei dieser Ausgestaltung auch die Hohlachse unterteilt ist, ist es zweckmäßig, wenn die Spannrollen mit den Hohlachsen an unabhängig bewegbaren Schwingen gelagert sind.

Die Hohlachse einer Spannrolle kann auch zur Aufnahme einer Leitung zum Zuführen von Inertgas zu einer Düse verwendet werden, aus der das Inertgas in den Schweißspalt geleitet wird. Umgekehrt kann auch eine Leitung zum Abführen der Schweißdämpfe in einer Hohlachse vorgesehen sein.

Beim Schweißen mittels Laserstrahl wird der Laserstrahl, wie an sich bekannt, in einem Resonator erzeugt, zur Schweißstelle geleitet und, im Hinblick auf eine maximale Energieübertragung auf das zu schweißende Gut, zu einem möglichst kleinen Schweißfleck fokussiert. Damit die optimale Energieübertragung vom Laserstrahl auf das zu schweißende Gut erreicht werden kann, ist es beim Verschweißen von Blechen oder Bändern unterschiedlicher Dicke vorteilhaft, wenn der Schweißfleck des Laserstrahls in Höhe und Lage auf das zu verschweißende Gut eingestellt werden kann. Dafür ist nach einer weiteren Ausgestaltung der Erfindung vorgesehen, den Schweißkopf der Laserschweißeinrichtung mittels eines Manipulatorarmes im Inneren der Hohlachse einer Spannrolle derart zu führen, daß der Schweißkopf in allen drei Koordinatenachsen bewegbar ist. Dies ist insbesondere von Vorteil, wenn zwei unterschiedlich dicke Bleche oder Bänder aneinandergeschweißt werden sollen, da in diesem Fall der Laserstrahl nicht senkrecht, sondern unter einem vorgegebenen Winkel in den Schweißspalt geleitet werden kann. Mittels einer in Bandlaufrichtung vor den Spannrollen zur Bestimmung der Lage des Schweißspaltes angeordneten Sensors läßt sich der Schweißkopf über einen Steuerantrieb optimal auf den Schweißspalt ausrichten.

Im folgenden wird die Erfindung anhand einer ein Ausführungsbeispiel darstellenden Zeichnung näher erläutert. Im einzelnen zeigen:

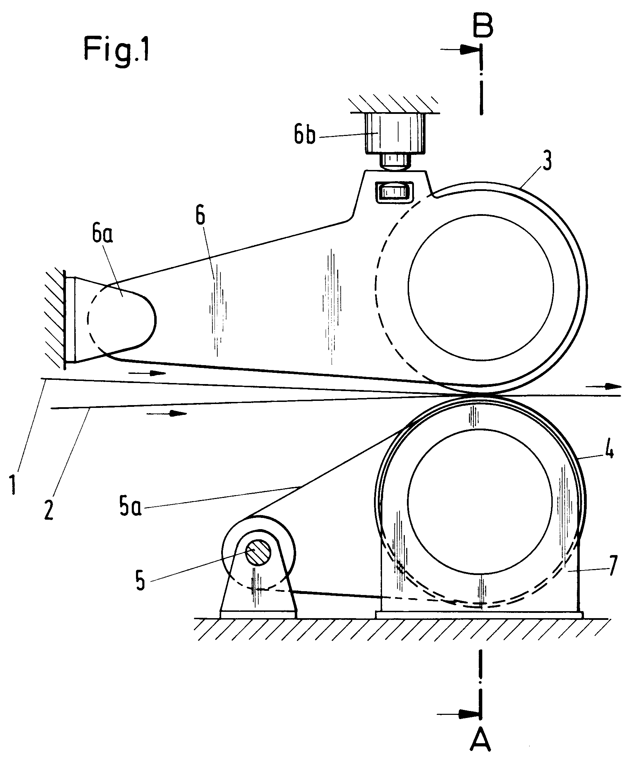

Fig. 1   eine Spannvorrichtung für auf Stoß miteinander zu verschweißende Bänder in Seitenansicht,

Fig. 2   die Spannvorrichtung gemäß Fig. 1 in Aufsicht,

Fig. 3   Spannrollen der Spannvorrichtung gemäß Fig. 1 mit Laserschweißeinrichtung im Schnitt nach der Linie A-B der Fig. 1,

Fig. 4   die Spannrollen gemäß Fig. 3 im Schnitt nach der Linie C-D der Fig. 3 ausschnittweise in vergrößerter Darstellung,

Fig. 5   die Spannrollen der Vorrichtung gemäß Fig. 1 im Schnitt nach der Linie A-B ausschnittweise in vergrößerter Darstellung für unterschiedlich dicke Bänder,

Fig. 6   zwei Spannrollen der Vorrichtung gemäß Fig. 1 im Schnitt nach der Linie A-B ausschnittweise in vergrößerter Darstellung für gleich dicke Bänder **und**

Fig. 7   eine Laserschweißeinrichtung im Längsschnitt.

Zwei miteinander zu verschweißende Bänder 1,2 werden mittels in der Zeichnung nicht dargestellter Führungsmittel unter spitzem Winkel derart zusammengeführt, daß sie im Bereich zwischen zwei Spannrollen 3,4 mit ihren benachbarten Kanten auf Stoß liegen. Die obere Spannrolle 3 ist mittels einer Schwinge 6 in einem Lagerbock 6a schwenkbar und damit höhenverstellbar gegenüber der unteren Spannrolle 4 gelagert. Zur Einstellung der Höhe der Spannrolle 3 dient ein hydraulisch betätigbarer Höhenanschlag 6b. Während die obere Spannrolle 3 frei drehbar gelagert ist, wird die untere, in einem Lagerbock 7 gelagerte Spannrolle 4 über einen Riementrieb 5a von einem Antrieb 5 angetrieben.

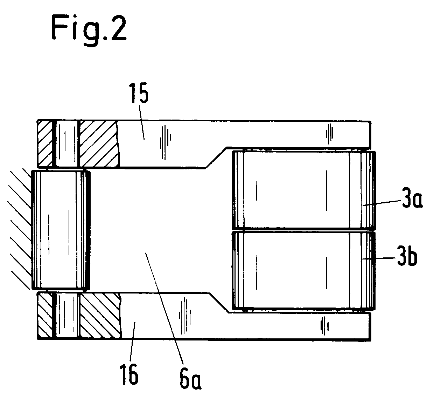

Wie in Fig. 2 dargestellt, kann die Schwinge 6 zwei unabhängig voneinander verschwenkbare Arme 15,16 haben, die jeweils eine Hälfte 3a,3b der Spannrolle 3 tragen. Dies ermöglicht die Einstellung auf unterschiedlich dicke Bänder 1,2.

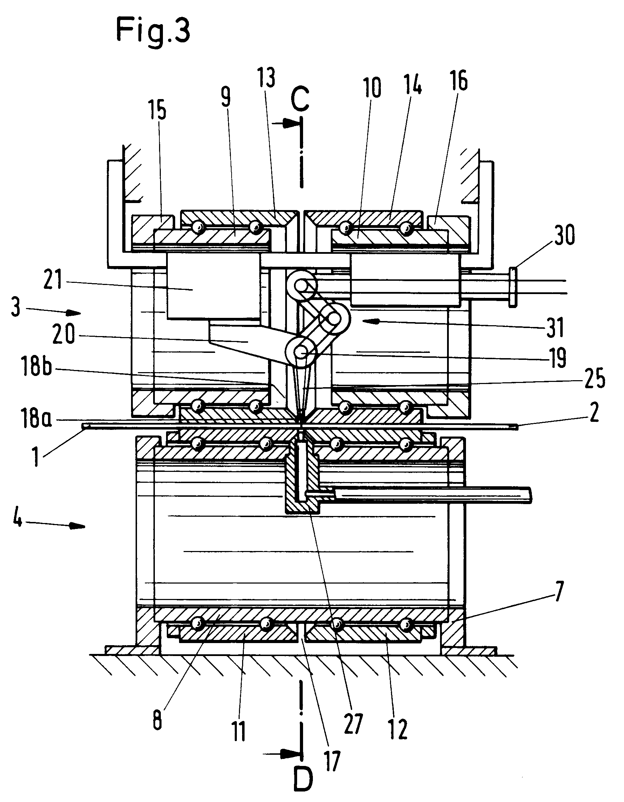

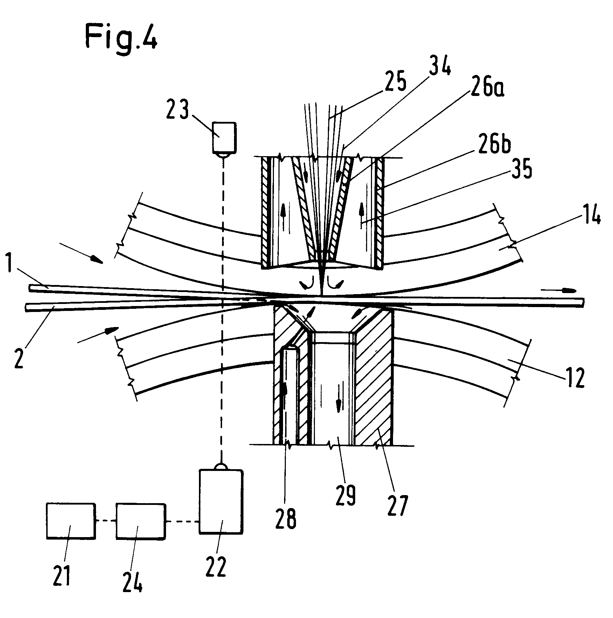

Aus Fig. 3 ist zu entnehmen, daß jede Spannrolle 3,4 eine Hohlachse 8,9,10 mit darauf kugelgelagerten Rollenmänteln 11,12,13,14 aufweist. Die Rollenmäntel 11,12,13,14 sind mit axialem Abstand voneinander angeordnet und bilden deshalb zwischen sich einen Spalt 17,18a. Die obere Hohlachse 9,10 ist im Bereich des Spaltes 18a zur Bildung eines korrespondierenden Spaltes 18b geteilt, während die untere Hohlachse 8 durchgehend ist. Nur im oberen Bereich weist letztere eine Öffnung auf, in der eine Zufuhrvorrichtung 27 für Inertgas angeordnet ist. Über diese Zufuhrvorrichtung 27 und den Spalt 17 läßt sich Inertgas zur Schweißstelle fördern. Wie aus Fig. 4 ersichtlich, kann die Zufuhrvorrichtung zwei Kanäle 28,29 für die Zufuhr des Inertgases und für die Abfuhr der Schweißdämpfe haben.

Bei der oberen Spannrolle 3 haben die Hohlachsen 9,10 einen verhältnismäßig großen axialen Abstand. Die Rollenmäntel 13,14 überlappen die Hohlachsen 9,10, so daß die Bandkanten in engem Abstand von dem Schweißpunkt eingespannt sind. Außerdem sind die Ränder der Rollenmäntel 13,14 abgeschrägt. Diese Ausbildung ermöglicht ein nahes Heranrücken des Schweißkopfes 19 an den Schweißpunkt. In der Hohlachse 9 ist ein Stellantrieb 21 vorgesehen, der über einen Manipulatorarm 20 den Schweißkopf 19 einer Laserschweißeinrichtung in drei Achsen bewegt. Zur Steuerung des Stellantriebes kann, wie aus Fig. 4 ersichtlich, eine Meßeinrichtung zur Überwachung des Schweißspaltes vorgesehen sein, die beispielsweise aus einer Strahlungsquelle 23, insbesondere einem Laser, und einem Sensor 22, insbesondere einer Diodenzeilenkamera, bestehen kann. Die Signale des Sensors 22 werden einer Auswerteeinrichtung 24 zugeführt, die die Größe und Lage des Schweißspaltes in bezug auf Sollage und Sollbreite ermittelt und bei einer Soll-/Istwertabweichung Steuerimpulse an den Stellantrieb 21 gibt, der entsprechend den Schweißkopf 19 nachführt.

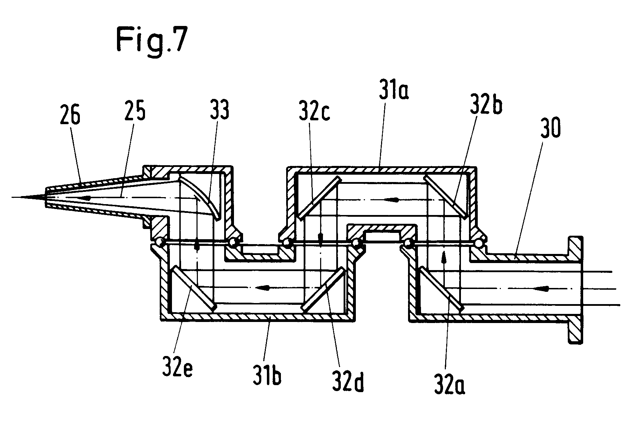

Durch die Hohlachse 10 verläuft ein Schutzrohr 30 für den von einem nicht dargestellten Resonator erzeugten Laserstrahl. Das Schutzrohr 30 geht über in einen in Fig. 3 nur schematisch dargestellten gelenkigen Abschnitt 31, der sich aus mehreren Gelenkteilen 31a,31b zusammensetzt. In Fig. 7 ist ein solcher Abschnitt mit den Gelenkteilen 31a,31b und planparallelen Umlenkspiegeln 32a-32e und einem fokussierenden Hohlspiegel 33 im Schweißkopf 19 dargestellt.

In Fig. 4 ist dargestellt, daß der Laserstrahl durch das Innere von zwei koaxialen Rohren 26a,26b geführt wird. Durch das innere Rohr 26a wird außerdem Schutzgas 34 geleitet, das zusammen mit beim Schweißen entstehenden Schweißgasen 35 durch den zwischen innerem und äußerem Rohr 26a,26b gebildeten Ringkanal abgesaugt wird.

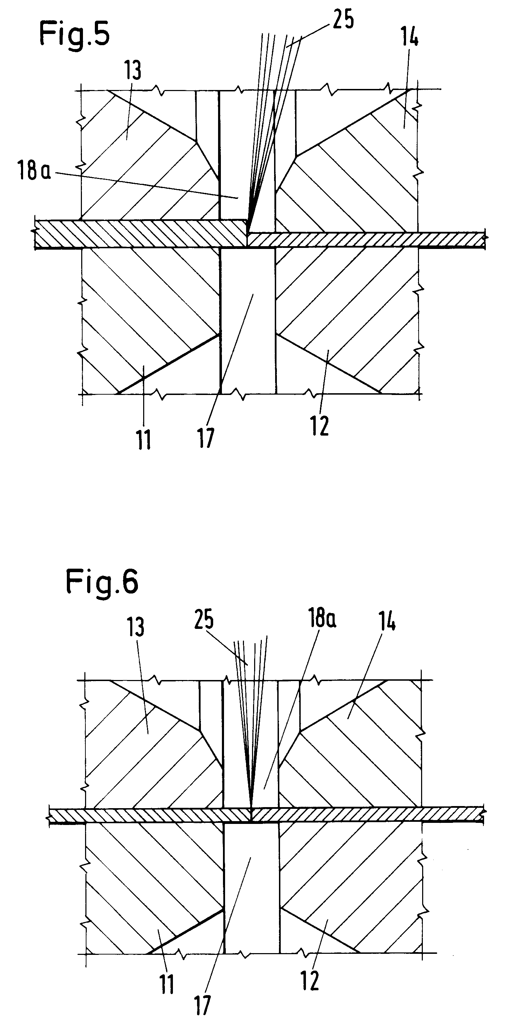

Die Fig. 5 zeigt, daß bei unterschiedlich dicken Bändern 1,2 der Laserstrahl 25 schräg auf den Schweißspalt gerichtet ist. Damit dies ohne Behinderung durch die Rollenmäntel 13,14 möglich ist, sollten diese abgeschrägt sein.

Beim Verschweißen gleich dicker Bleche gemäß Fig. 6 ist der Laserstrahl dagegen senkrecht auf den Schweißspalt gerichtet.

## Patentansprüche

1. Vorrichtung zum kontinuierlichen Verschweißen von auf Stoß geführten Bändern bzw. Blechen (1,2) mittels mindestens eines ortsfesten Laserstrahls (25) mit auf beiden Seiten der zu verschweißenden Bänder bzw. Bleche (1,2) paarweise senkrecht zu deren Laufrichtung angeordneten Spannrollen (3,4),
**dadurch gekennzeichnet, daß die Spannrollen (3,4) aus Hohlachsen (8,9,10) und darauf gelagerten und mit axialem Abstand voneinander angeordneten Rollenmänteln (11,12,13,14) bestehen und jeder Schweißkopf (19) der Laserstrahlschweißeinrichtung (19,20,30,31) im Inneren der Hohlachse (9,10) mindestens einer Spannrolle (3) angeordnet ist, wobei als Durchgang für den Laserstrahl (25) der Spalt (18a) zwischen den Rollenmänteln (13,14) und eine Öffnung (18b) in der Hohlachse (9,10) dienen.

2. Vorrichtung nach Anspruch 1,
**dadurch gekennzeichnet,** daß die Hohlachse (9,10) im Bereich des Spaltes (18a) zwischen den Rollenmänteln (13,14) geteilt ist, wobei der dadurch zwischen den beiden Teilen der Hohlachse (9,10) gebildete Spalt (18b) die Öffnung für den Durchgang des Laserstrahls (25) bildet.

3. Vorrichtung nach einem der Ansprüche 1 bis 2,
**dadurch gekennzeichnet,** daß jeweils mindestens ein Schweißkopf (19) in den auf beiden Seiten der Bänder bzw. Bleche (1,2) angeordneten Spannrollen (3,4) vorgesehen ist.

4. Vorrichtung nach einem der Ansprüche 1 bis 3,
**dadurch gekennzeichnet,**
daß mehrere Schweißköpfe in einer auf einer Band- oder Blechseite angeordneten Spannrolle in Band- oder Blechlaufrichtung versetzt zueinander angeordnet sind.

5. Vorrichtung nach einem der Ansprüche 1 bis 4,
**dadurch gekennzeichnet,** daß die Spannrollen (3,3a,3b) höhenverstellbar gelagert sind.

6. Vorrichtung nach einem der Ansprüche 2 und 4
**dadurch gekennzeichnet,** daß die Spannrollen (3a,3b) mit ihren Hohlachsen (9,10) an unabhängig bewegbaren Schwingen (15,16) gelagert sind.

7. Vorrichtung nach einem der Ansprüche 1 bis 6,
**dadurch gekennzeichnet,** daß die Hohlachse (8) einer Spannrolle (4) zur Aufnahme einer Zufuhrvorrichtung (27) für den Schweißspalt zuzuführendes Inertgas ausgebildet ist.

8. Vorrichtung nach einem der Ansprüche 1 bis 7,
**dadurch gekennzeichnet,** daß die Hohlachse (8) einer Spannrolle (4) eine Leitung (29) zum Abführen von Schweißdämpfen aufnimmt.

9. Vorrichtung nach einem der Ansprüche 1 bis 8,
**dadurch gekennzeichnet,** daß der Schweißkopf (19) der Laserschweißeinrichtung (19,20,30,31) mittels eines Manipulatorarmes (20) im Inneren der Hohlachse (9) einer Spannrolle (3,3a,3b) in drei Koordinatenrichtungen bewegbar angeordnet ist.

10. Vorrichtung nach Anspruch 9,

dadurch gekennzeichnet, daß zur Steuerung eines Stellantriebes (21) für den Manipulatorarm (20) ein Sensor (22,23) zur Bestimmung des Schweißspaltes in Bandlaufrichtung vor dem Schweißpunkt angeordnet ist.

## Claims

1. An apparatus for the continuous welding of abutting strips or sheets (1,2) by means of a fixed laser beam (25), having disposed in pairs on both sides of the strips or sheets (1,2) to be welded tension rollers (3,4) extending perpendicularly to the direction of travel of the strips or sheets, characterized in that the tension rollers (3,4) consist of hollow shafts (8,9,10) and roller shells (11,12,13,14) mounted thereon spaced out at an axial distance from one another, and each welding head of the laser beam welding device (19,20,30,31) is disposed inside the hollow shaft (9,10) of at least one tension roller (13), the laser beam (25) passing through the gap (18a) between the roller shells (13,14) and an opening (18b) in the hollow shaft (9,10).

2. An apparatus according to Claim 1, characterized in that in the zone of the gap (18a) between the roller shells (13,14), the hollow shaft (9,10) is divided, the gap (18b) opened thereby between the two parts of the hollow shaft (9,10) forming the opening through which the laser beam (25) passes.

3. An apparatus according to one of claims 1 to 2, characterized in that at least one welding head (19) is disposed in each of the tension rollers (3,4) disposed on both sides of the strips or sheets (1,2).

4. An apparatus according to one of claims 1 to 3, characterized in that a number of welding heads are disposed offset in relation to one another in the direction of strip or sheet travel in a tension roller disposed on one side of the strip or sheet.

5. An apparatus according to one of claims 1 to 4, characterized in that the tension rollers (3,3a,3b) are vertically adjustably mounted.

6. An apparatus according to one of claims 2 and 4, characterized in that the tension rollers (3a,3b) are mounted by their hollow shaft (9,10) on independently movable rockers (15,16).

7. An apparatus according to one of claimes 1 to 6, characterized in that the hollow shaft (8) of one tension roller (4) is adapted to receive a supply device (27) for inert gas to be supplied to the welding gap.

8. An apparatus according to one of claims 1 to 7, characterized in that the hollow shaft (8) of one tension roller (4) receives a tube (29) for the removal of welding vapours.

9. An apparatus according to one of claims 1 to 8, characterized in that the welding head (19) of the laser welding device (19,20,30,31) is supposed to move in three coordinate directions but inside the hollow shaft (9) of one tension roller (3,3a,3b) by means of a manipulator arm.

10. An apparatus according to one of claims 1 to 9, characterized in that a sensor (22,23) for determining the welding gap in the direction of strip or sheet travel is disposed upstream of the weld point to control an adjusting drive (21) for the manipulator arm (20).

## Revendications

1. Dispositif pour le soudage continu de feuillards ou respectivement de tôles (1, 2) guidées en poussée au moyen d'au moins un rayon laser (25) fixe avec des cylindres de tension (3, 4) disposés par paires des deux côtés des feuillards ou respectivement tôles (1, 2) à souder orthogonalement à leur direction de marche, caractérisé en ce que les cylindres de tension (3, 4) sont constitués par des axes creux (8, 9, 10) et des jupes de cylindre (11, 12, 13, 14) montés dessus et disposées à distance axiale les unes des autres et chaque tête de soudage (19) du dispositif de soudage à rayon laser (19, 20, 30, 31) est disposé à l'intérieur de l'axe creux (9, 10) d'au moins un cylindre de tension (3), la fente (18a) entre les jupes de cylindre (13, 14) et une ouverture (18b) dans l'axe creux (9, 10) servant pour le passage du rayon laser (25).

2. Dispositif selon la revendication 1, caractérisé en ce que l'axe creux (9, 10) est divisé dans la région de la fente (18a) entre les jupes de cylindre (13, 14), la fente (18b) ainsi formée entre les deux parties de l'axe creux (9, 10) formant l'ouverture pour le passage du rayon laser (25).

3. Dispositif selon l'une des revendications 1 à 2, caractérisé en ce que chaque fois au moins une tête de soudage (19) est prévue dans les cylindres de tension (3, 4) disposés des deux côtés des feuillards ou respectivement des tôles (1, 2).

4. Dispositif selon l'une des revendications 1 à 3, caractérisé en ce que plusieurs têtes de soudage sont disposées décalées les unes par rapport aux autres dans la direction de marche du feuillard ou de la tôle dans un cylindre de tension disposé sur un côté du feuillard ou de la tôle.

5. Dispositif selon l'une des revendications 1 à 4, caractérisé en ce que les cylindres de tension (3, 3a, 3b) sont montés réglables en hauteur.

6. Dispositif selon l'une des revendications 2 et 4, caractérisé en ce que les cylindres de tension (3a, 3b) sont montés par leurs axes creux (9, 10) sur des bielles oscillantes (15, 16) mobiles indépendamment.

7. Dispositif selon l'une des revendications 1 à 6, caractérisé en ce que l'axe creux (8) d'un cylindre de tension (4) est conformé pour recevoir un dispositif d'amenée (27) pour un gaz inerte à amener à la fente de soudage.

8. Dispositif selon l'une des revendications 1 à 7, caractérisé en ce que l'axe creux (8) d'un cylindre de tension (4) reçoit une conduite (29) pour l'évacuation de vapeurs de soudage.

9. Dispositif selon l'une des revendications 1 à 8, caractérisé en ce que la tête de soudage (19) du dispositif de soudage laser (19, 20, 30, 31) est disposée mobile dans trois directions de coordonnées au moyen d'un bras manipulateur (20) à l'intérieur de l'axe creux (9) d'un cylindre de tension (3, 3a, 3b).

10. Dispositif selon la revendication 9, caractérisé en ce qu'un capteur (22, 23) pour palper la fente de soudage est disposé avant le point de soudage dans la direction de marche du feuillard pour commander un organe correcteur (21) pour le bras manipulateur (20).

Fig.1

# Fig.2

# Fig.3

# Fig.4

Fig.5

Fig.6

## Fig.7